# EUROPÄISCHE PATENTSCHRIFT

(11) **EP 0 890 811 B1**
(45) Veröffentlichungstag und Bekanntmachung des Hinweises auf die Patenterteilung: **20.11.2002**
(21) Anmeldenummer: 98111058.8
(22) Anmeldetag: 17.06.1998
(51) Int. Cl.: F28D 1/04, F28F 9/00

(54) **Wärmeübertrageranordnung mit zwei Wärmeübertragern**
Heat transfer apparatus with two heat exchangers
Dispositif d'échange de chaleur comprenant deux échangeurs de chaleur

(30) Priorität: 12.07.1997 DE 29712351 U
(43) Veröffentlichungstag der Anmeldung: 13.01.1999
(73) Patentinhaber: Behr GmbH & Co., 70469 Stuttgart (DE)
(72) Erfinder: Heine, Reinhard, 71686 Remseck 5 (DE)
(74) Vertreter: Patentanwälte Ruff, Wilhelm, Beier, Dauster & Partner

(56) Entgegenhaltungen:
- EP-A- 0 219 021
- EP-A- 0 693 665
- WO-A-97/42049
- DE-A- 3 744 644
- DE-A- 3 922 814
- DE-U- 9 319 025

## Beschreibung

Die Erfindung betrifft eine Wärmeübertrageranordnung mit zwei Wärmeübertragern, die durch eine Befestigungsvorrichtung an gegenüberliegenden Befestigungsseiten miteinander lösbar verbindbar sind, wobei die Befestigungsvorrichtung an einer Befestigungsseite eine mit hakenartigen Profilierungen versehene Steckhalterung aufweist, und wobei die Befestigungsvorrichtung an der anderen Befestigungsseite eine Rastverbindung aufweist, *wobei die Steckhalterung wie auch die Rastverbindung im Bereich von gege nüberliegenden Sammelkästen des einen Wärmeübertragers positioniert sind.*

Eine solche Wärmeübertrageranordnung ist aus der EP 0 693 665 A2 bekannt. Die Wärmeübertrageranordnung ist mit zwei Wärmeübertragern versehen, die durch eine Befestigungsvorrichtung miteinander verbunden sind. Die Befestigungsvorrichtung weist auf einer Befestigungsseite eine Steckhalterung auf, die aus einer als Loslager gestalteten Steckanordnung und einer als Festlager gestalteten Steckanordnung zusammengesetzt ist. Auf der gegenüberliegenden Befestigungsseite weist die Befestigungsvorrichtung eine Rastverbindung auf, die durch zwei zueinander beabstandete Schnapplaschen gebildet ist. In Abstand zwischen den beiden Schnapplaschen ist ergänzend ein zentraler Kraftaufnahmepunkt vorgesehen.

Eine weitere Wärmeübertrageranordnung ist aus der DE 39 22 814 A1 bekannt. Dabei wird ein erster Wärmeübertrager in Form eines Kondensators an einem zweiten Wärmeübertrager in Form eines Kühlers befestigt. Zur Befestigung des Kondensators sind an dem Kühler auf einer Seite des Kondensators zwei hakenförmig gestaltete Halter vorgesehen, in die der Kondensator von oben her eingesetzt wird. Auf der gegenüberliegenden Seite ist der Kondensator mit Halterungen versehen, die mit Hilfe von Schraubverbindungen am Kühler festgelegt werden. Die unteren Halter dienen somit als Steckhalterung, in die der Kondensator eingesetzt und anschließend an seinem oberen Endbereich mittels der Halterungen mit dem Kühler verschraubt wird.

Aufgabe der Erfindung ist es, eine Wärmeübertrageranordnung der eingangs genannten Art zu schaffen, die eine vereinfachte Verbindung der beiden Wärmeübertrager miteinander gewährleistet, und die Stabilität der Verbindung zwischen den beiden Wärmeübertragern verbessert.

Diese Aufgabe wird dadurch gelöst, dass die Rastverbindung in eine als Loslager gestaltete *Befestigungsstelle* und in eine als Festlager gestaltete *Befestigungsstelle* unterteilt ist, *dass jede Befestigungsstelle eine Rastanordnung an einem der Wärmeübertrager und wenigstens eine korrespondierende Rastaussparung an dem anderen Wärmeübertrager umfasst,* und dass jeder Rastanordnung eine Kraftaufnahmeeinrichtung zugeordnet ist, die einen an dem einen Wärmeübertrager angeordneten Stützkörper sowie wenigstens einen an dem anderen Wärmeübertrager angeordneten und den Stützkörper im montierten Zustand der Wärmeübertrager zumindest teilweise umgreifenden Stützsteg aufweist. Dadurch wird eine äußerst einfache Verbindung zwischen den beiden Wärmeübertragern geschaffen, die ohne zusätzliche Befestigungselemente wie Schraubelemente oder ähnliches auskommt. Durch die Gestaltung als Fest- und als Loslager wird eine statisch bestimmte Festlegung des einen Wärmeübertragers am anderen geschaffen, wobei auch Herstellungstoleranzen ausgeglichen werden können. Durch die Kraftaufnahmeeinrichtung wird ein zusätzlicher Formschluss im Bereich der Rastanordnungen erzielt, der die Stabilität der Verbindung zwischen den beiden Wärmeübertragern verbessert.

In Ausgestaltung der Erfindung weist jede Rastanordnung ein elastisch nachgiebiges Rasthakenpaar auf, wobei die Rasthaken jedes Rasthakenpaares die Ränder der korrespondierenden Rastaussparung in montiertem Zustand hintergreifen. Dadurch wird eine sichere und stabile Rastverbindung geschaffen.

In weiterer Ausgestaltung der Erfindung ist zwischen den Rasthaken jedes Rasthakenpaares jeweils wenigstens ein als Stütze dienender Mittelsteg zur Begrenzung der Auslenkbarkeit der Rasthaken vorgesehen. Dadurch wird eine Überlastung des einen oder anderen Rasthakens des Rasthakenpaares vermieden, so dass ein Ausfall eines solchen Rasthakens durch Abbrechen oder ähnliche Beschädigungen nahezu nicht auftreten kann.

In weiterer Ausgestaltung der Erfindung sind die Sammelkästen aus Kunststoff hergestellt, und die den Sammelkästen des Wärmeübertragers zugeordneten Teile der Steckhalterung wie auch der Rastverbindung sind einstückig an den Sammelkästen angeformt. Dadurch ergibt sich eine besondere funktionssichere und kostengünstige Herstellbarkeit der Befestigungsvorrichtung.

In weiterer Ausgestaltung der Erfindung sind die Rastanordnungen und die zugeordneten Kraftaufnahmeeinrichtungen zueinander benachbart positioniert, und die Ränder der Rastaussparungen sind ergänzend als Stützstege der Kraftaufnahmeeinrichtungen gestaltet. Dadurch weisen die Ränder der Rastaussparungen eine Doppelfunktion auf, da sie zum einen zur Festlegung der Rasthaken und zum anderen zur seitlich flankierenden Stützung der Stützkörper dienen. Diese Ausgestaltung ermöglicht einen besonders kompakten und platzsparenden Aufbau der Befestigungsvorrichtung.

In weiterer Ausgestaltung der Erfindung sind die Stützkörper mit sich verjüngenden Zentrierspitzen versehen. Dadurch wird die Montage des einen Wärmeübertragers am anderen Wärmeübertrager vereinfacht.

*Weitere Vorteile und Merkmale der Erfindung ergeben sich aus den Unteransprüchen. Nachfolgend sind bevorzugte Ausführungsbeispiele der Erfindung beschrieben und anhand der Zeichnungen dargestellt.*
- Fig. 1: zeigt perspektivisch einen Wärmeübertrager in Form eines Kühlmittel/Luftkühlers, an dessen auch als Sammelkästen bezeichneten Kühlmittelkästen eine Steckhatterung sowie eine Rastverbindung für die Festlegung eines zweiten Wärmeübertragers vorgesehen sind,
- Fig. 2: in vergrößerter Darstellung einen Teil des einen Kühlmittelkastens des Kühlers nach Fig. 1 im Bereich einer als Loslager gestalteten Rastanordnung,
- Fig. 3: eine weitere Rastanordnung an dem gegenüberliegenden Kühlemittelkasten des Kühlers nach Fig. 1, die als Festlager gestattet ist,
- Fig. 4: schematisch einen Schnitt durch eine erfindungsgemäße Wärmeübertrageranordnung auf Höhe einer Rastanordnung nach Fig. 3, wobei an dem Kühler ein Kondensator festgelegt ist,
- Fig. 5a bis 5c: verschiedene Montageschritte der Funktion der Rastanordnungen nach den Fig. 1 bis 4,
- Fig. 6: schematisch eine weitere Ausführung einer Rastverbindung zur Festlegung eines ersten Wärmeübertragers an einen zweiten Wärmeübertrager,
- Fig. 7: eine weitere Steckhalterung ähnlich Fig. 1 zur Festlegung der der Rastverbindung nach Fig. 6 gegenüberliegenden Seite des einen Wärmeübertragers an dem anderen Wärmeübertrager,

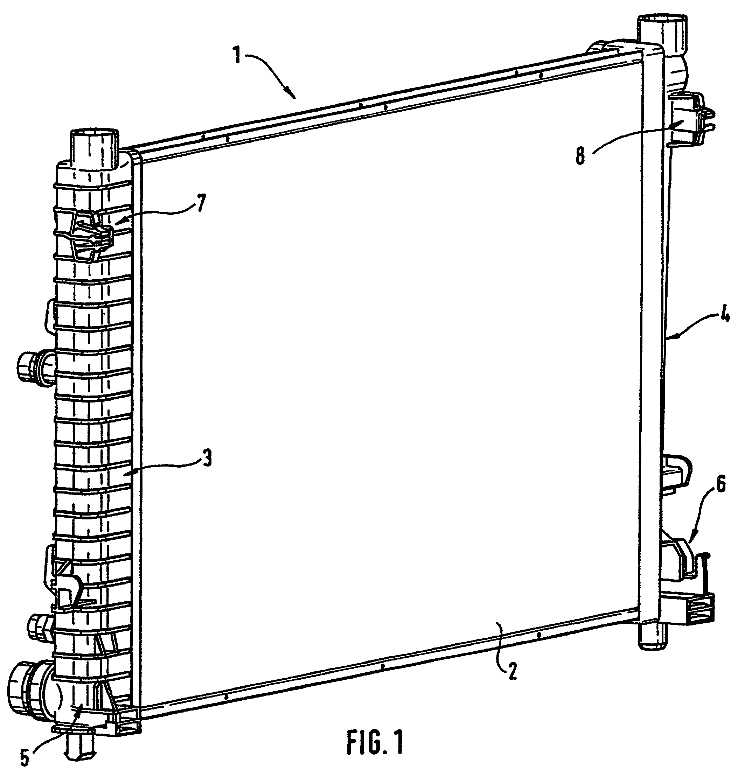

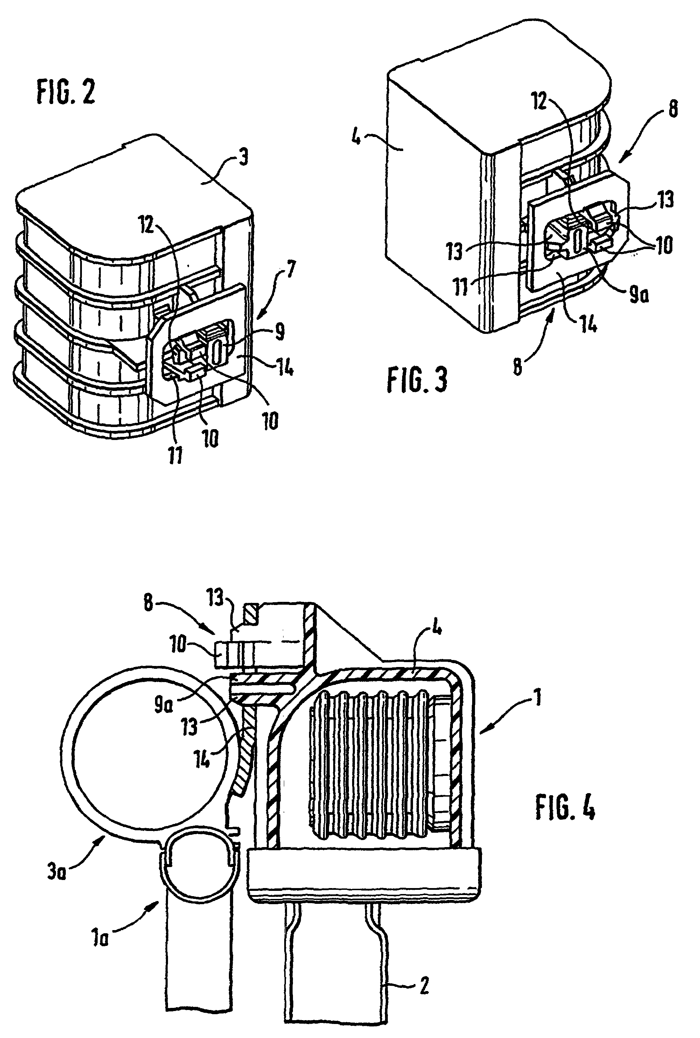

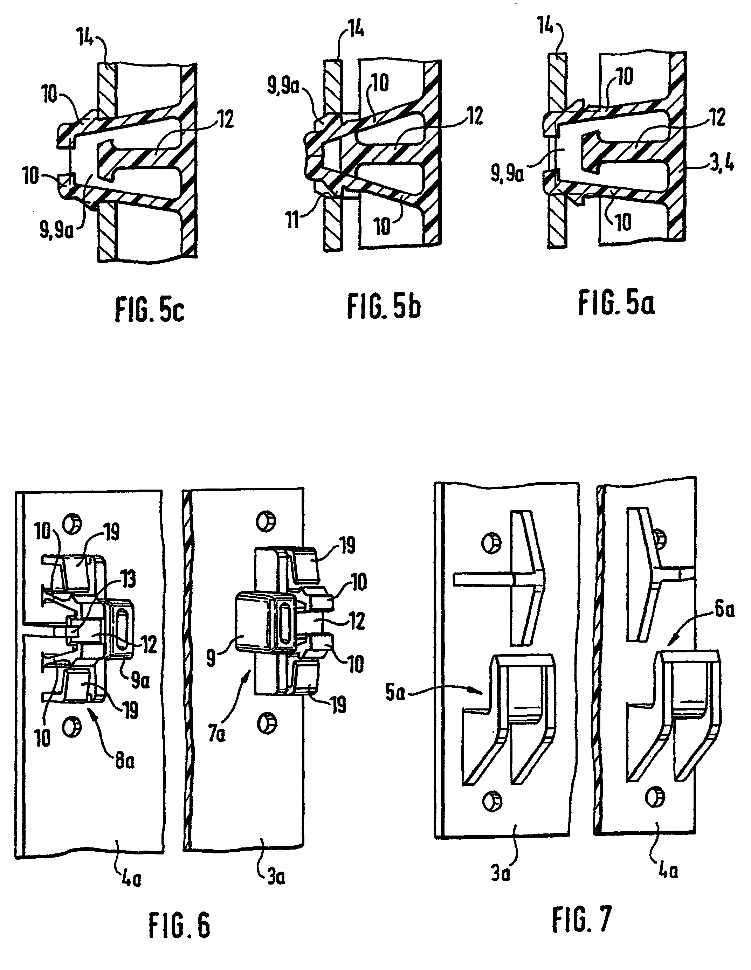

Ein Wärmeübertrager 1 in Form eines Kühlmittel/Luftkühlers ist in nachfolgend näher beschriebener Weise mit einer Befestigungsvorrichtung versehen, die die Festlegung eines zweiten Wärmeübertragers, vorzugsweise in Form eines Kondensators 1a (Fig. 4) an dem Kühler 1 ermöglicht. Der Kühler 1 weist in an sich bekannter Weise einen Rippen/Rohrblock 2 auf, der in der Darstellung nach Fig. 1 im Bereich seiner Oberseite sowie im Bereich seiner Unterseite durch nicht näher bezeichnete Seitenteile begrenzt ist. Auf die gegenüberliegenden Seiten des Rippen/Rohrblockes 2 sind zwei Kühlmittelkästen 3, 4 aufgesetzt, die jeweils aus Kunststoff hergestellt sind. Zur Festlegung des Kondensators 1a an dem Kühler 1 wird der Kondensator 1a im Bereich einer unteren Befestigungsseite in eine Steckhalterung 5, 6 am Kühler 1 eingesetzt, wobei die Steckhalterung 5, 6 durch zwei an den beiden Kühlmittelkästen 3, 4 angeformte, als hakenartige Profilierungen dienende Stützhaken 5, 6 gestaltet ist. Die beiden Stützhaken 5, 6 nehmen die Unterseite des Kondensators 1a derart auf, daß er formschlüssig nach unten sowie horizontal vom Kühler 1 weg (auf Fig. 1 bezogen) gehalten ist. Der grundsätzliche Aufbau sowie die Funktion der Steckhalterung 5, 6 entspricht der Steckhalterung, wie sie in der DE 39 22 814 A1 beschrieben ist. Wesentlicher Unterschied ist bei der Steckhalterung nach Fig. 1 wie auch nach Fig. 7, daß die Stützhaken 5, 6; 5a, 6a einstückig an dem jeweiligen Kühlmittelkasten 3, 4; 3a, 4a angeformt sind. In geringem Abstand oberhalb der Steckhalterung 5, 6 wie auch der Steckhalterung 5a, 6a sind ergänzende, nicht näher bezeichnete Positionierstege vorgesehen, die eine spielfreie Halterung der Unterseite des Kondensators in der Steckhalterung 5, 6; 5a, 6a im montierten Zustand des Kondensators 1a am Kühler 1 gewährleisten.

Zur Montage des Kondensators 1a im Bereich seines oberen Sammelkastens 3a an dem Kühler 1 sind an der dem Kühler 1 zugewandten Seite der beiden Sammelkästen 3a zwei stabile Befestigungslaschen 14 festgelegt, wobei jeder Sammelkasten 3a mit jeweils einer als Halteplatte dienende Befestigungslasche 14 versehen ist. Beim dargestellten Ausführungsbeispiel ist der Sammelkasten 3a aus Metall hergestellt. Die Befestigungslaschen 14 sind mit den Sammelkästen 3a verlötet. Die beiden Befestigungslaschen 14 sind auf Höhe *von* beiden oberen Befestigungsstellen 7, 8 im Bereich der gegenüberliegenden Kühlmittelkästen 3, 4 positioniert. Beide Befestigungslaschen 14 weisen gemäß den Fig. 2 und 3 jeweils eine, als rechteckiger Durchbruch gestaltete Rastaussparung 11 auf, die mit beiden Rastanordnungen der Befestigungsstellen 7 und 8 in Wirkverbindung bringbar sind. Den beiden Rastanordnungen sind Kraftaufnahmeeinrichtungen in Form von Stützkörpern 9 bzw. 9a (Fig. 2 und 3) zugeordnet, die jeweils als quaderförmige Blöcke von den beiden Kühlmittelkästen 3, 4 abragen und einstückig an diesen angeformt sind. Auch die nachfolgend näher beschriebenen Rastanordnungen sind einstückig an den Kühlmittelkästen 3, 4 angeformt. Die Stützkörper 9, 9a sind jeweils unmittelbar benachbart neben den zugeordneten Rastanordnungen angeordnet. Die beiden Stützkörper 9, 9a der beiden Kraftaufnahmeeinrichtungen weisen eine Höhe auf, die der Höhe der jeweiligen Rastaussparung 11 entspricht, so daß die oberen und unteren Längsseiten der Rastaussparungen 11 die korrespondierenden oberen und unteren Seitenflächen der quaderförmigen Stützkörper 9, 9a formschlüssig und stützend flankieren.

Zur Schaffung der Loslagerfunktion der Befestigungsstelle 7 ist die Rastaussparung 11 in Querrichtung länger gestaltet als die gemeinsame Länge der Rastanordnung 10, 12 und des Stützkörpers 9, so daß die Befestigungslasche 14 relativ zu dem Stützkörper 9 und der Rastanordnung 10, 12 - auf die Darstellung nach den Fig. 1 bis 3 bezogen - horizontal verschiebbar ist. Zur Schaffung der Festlagerfunktion bei der gegenüberliegenden Befestigungsstelle 8 am anderen Kühlmittelkasten 4 ragen zwei Füllstege 13 zu beiden Seiten von dem Stützkörper 9a einerseits und der Rastanordnung 10, 12 andererseits nach außen ab, wobei beide Füllstege 13 jeweils einstückig am Kühlmittelkasten 4 angeformt sind. Die Füllstege 13 sind derart dimensioniert, daß die gesamte Breite der Befestigungsstelle 8 etwa der korrespondierenden Länge der Rastaussparung 11 entspricht, so daß die Befestigungslasche 14 sowohl in Querrichtung als auch in Hochrichtung im wesentlichen spielfrei durch den Stützkörper 9a sowie die Füllstege 13 gehalten ist.

Sowohl auf der Loslager- als auch auf der Festlagerseite sind die Rastanordnungen jeweils identisch gestaltet. Jede Rastanordnung weist ein Rasthakenpaar 10 auf, das in Hochrichtung - auf die Darstellung nach den Fig. 1 bis 3 bezogen - in gewissen Grenzen elastisch nachgiebig gestaltet ist. Beide Rasthaken des Rasthakenpaares 10 weisen jeweils eine Rastnase auf, die nach oben bzw. nach unten ragt und im montierten Zustand den oberen und den unteren Rand der zugeordneten Rastaussparung 11 der Befestigungslasche 14 hintergreifen. Wie aus den Fig. 5a bis 5c gut erkennbar ist, ist zwischen den beiden Rasthaken des Rasthakenpaares 10 ein als Anschlag und als Stütze dienender Mittelsteg 12 vorgesehen, der an seinem freien Ende einen zu den beiden Rasthaken 10 hin abragenden Hammerkopf aufweist. Dieser Mittelsteg 12 dient dazu, die Auslenkung der Rasthaken 10 zur Mitte hin zu begrenzen und so eine zu starke Biegung des einen oder des anderen Rasthakens 10 bei der Montage zu verhindern. Der Mittelsteg 10 ist stabil und starr gestaltet und gewährleistet neben seiner Stützung der Rasthaken 10 auch eine gleichmäßige und zentrierte Einführung der Rasthaken 10 in die Rastaussparung 11, wie anhand der Fig. 5a bis 5c gut erkennbar ist. Die Breite des Hammerkopfes des Mittelsteges 12 ist derart auf die Rasthaken 10 sowie deren zugehörige Rastnasen abgestimmt, daß die Rasthaken 10 beim Einschieben der Rasthaken 10 in die Rastaussparung 11 gleichzeitig an dem Hammerkopf zur Anlage kommen, wobei der Abstand der Spitzen der Rastnasen zueinander nahezu exakt der korrespondierenden Erstreckung der Rastaussparung 11 entspricht. Da gleichzeitig auch der jeweilige Stützkörper 9, 9a in die Rastaussparung eingefügt wird, ist eine exakte Montierbarkeit gegeben, die fehlerhafte Montagen ausschließt. In der montierten Position gemäß Fig. 5c hintergreifen die Rastnasen der Rasthaken 10 die Ränder der Rastaussparung 11.

Das lediglich schematisch dargestellte Ausführungsbeispiel nach den Fig. 6 und 7 entspricht im wesentlichen dem zuvor beschriebenen Ausführungsbeispiel nach den Fig. 1 bis 5c. Unterschiedlich bei diesem Ausführungsbeispiel ist die verbesserte Gestaltung der beiden Rastanordnungen der als Loslager dienenden Befestigungsstelle 7a einerseits und der als Festlager gestalteten Befestigungsstelle 8a andererseits. Den beiden Rasthaken des Rasthakenpaares 10 sind jeweils quer zu den Rasthaken 10 elastisch nachgiebige Stützzungen 19 zugeordnet, die Toleranzen der Rastverbindung ausgleichen und einen spielfreien Sitz der Befestigungslaschen 14 auf den Rasthaken 10 ermöglichen. Diese Stützzungen 19 werden aus ihrer unbelasteten Ruheposition gemäß Fig. 6 beim Aufsetzen der Befestigungslaschen 14 nach unten gedrückt und verbleiben in dieser vorgespannten Position, sobald die Rastnasen der Rasthaken 10 die Befestigungslasche 14 hintergreifen. Dadurch üben die Stützzungen 19 von unten her eine Federkraft auf die Befestigungslaschen 14 aus, durch die diese gegen die Rastnasen gedrückt werden. Dadurch wird eine spiel- und damit klapperfreie Befestigung erzielt. Die Vorspannung der Stützzungen 19 ermöglicht zudem eine verbesserte Demontage der Wärmeübertrager, da die Befestigungslaschen 14 nach dem Lösen der Rasthaken durch die Stützzungen von den Rastanordnungen weggedrückt werden.

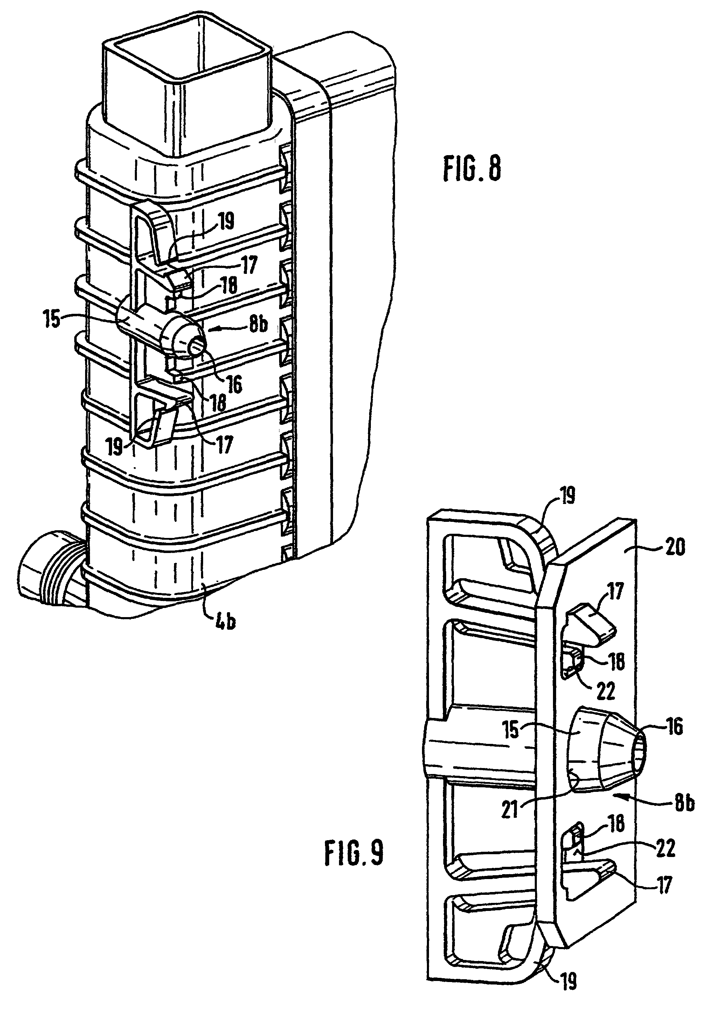

Beim Ausführungsbeispiel nach den Fig. 8 bis 11 sind die Rastanordnungen und die Kraftaufnahmeeinrichtungen in nachfolgend näher beschriebener Weise voneinander getrennt. Die untere Befestigung ist ebenfalls als Steckhalterung gestaltet, so daß hierzu auf die Beschreibung zu den vorhergehenden Ausführungsbeispielen verwiesen wird. Im Bereich der oberen Befestigungsseite weist der Wärmeübertrager, der vorzugsweise ebenfalls als Kondensator gestaltet ist, zur Festlegung an den gegenüberliegenden Kühlmittelkästen 4b für jede Befestigungsstelle 8b jeweils eine Befestigungslasche 20 auf, die starr an den Sammelkästen des Kondensators angeordnet sind. Die beiden Befestigungslaschen 20 weisen zur Aufnahme von zwei zueinander beabstandeten Rasthaken 17 zwei Rastaussparungen 22 auf. Zwischen den beiden Rastaussparungen 22 ist eine kreisrunde, als Stützausnehmung 21 dienende Aussparung in jeder Befestigungslasche 20 vorgesehen, die zur spielfreien Aufnahme eines kegelartigen Stützkörpers 15, 16 dient. Jedem Rasthaken 17 ist ein Stützsteg 18 zugeordnet, der einen Anschlag für den jeweiligen Rasthaken 17 bildet, um ein zu starkes Umbiegen des Rasthakens 17 bei der Montage zu verhindern. Der Stützsteg 18 ragt außerdem in die korrespondierende Rastaussparung 22 hinein, wodurch sich ein zusätzlicher Formschluß ergibt. Die Stützstege 18 sind starr und stabil gestaltet. Wie auch bei den vorhergehenden Ausführungsbeispielen sind alle Elemente der Rastanordnungen sowie der Kraftaufnahmeeinrichtungen einstückig an dem jeweiligen Kühlmittelkasten 4b angeformt. Auch jedem Rasthaken 17 ist analog dem Ausführungsbeispiel nach Fig. 6 jeweils eine elastisch nachgiebige Stützzunge 19 zugeordnet.

Der Stützkörper 15 weist eine Zentrierspitze 16 auf, die sich stark konisch verjüngt, um eine vereinfachte Einführung des Stützkörpers 15 in die korrespondierende Stützausnehmung 21 bei der Montage der beiden Wärmeübertrager zu ermöglichen.

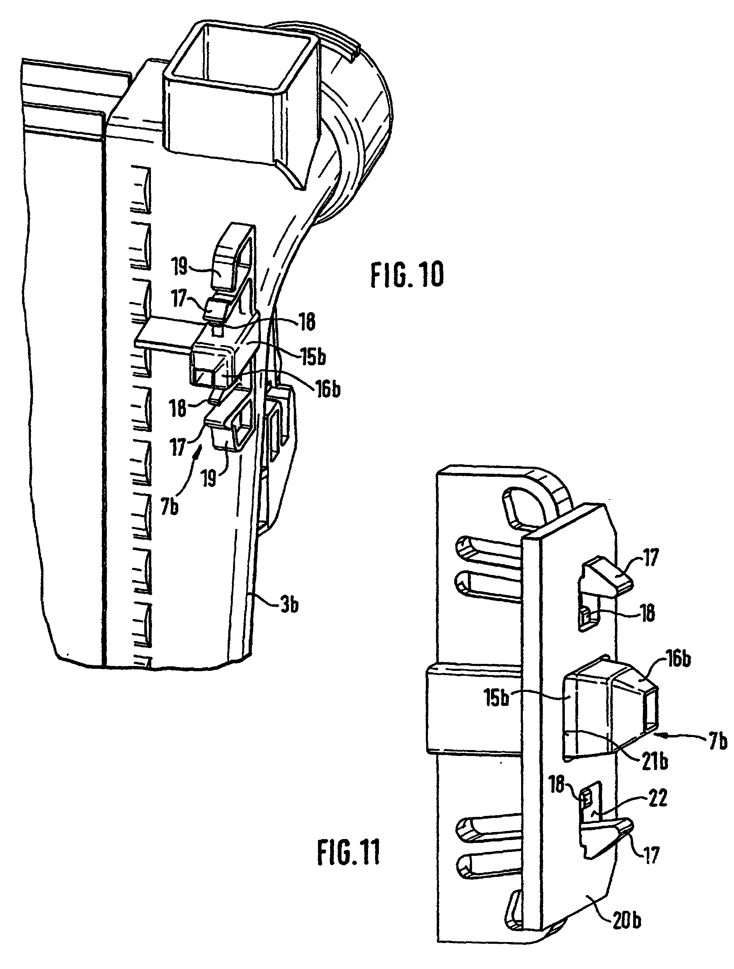

Bei der die Loslagerseite definierenden Befestigungsstelle 7b nach den Fig. 10 und 11 *sind* die Rastanordnung einschließlich der Rasthaken 17, der Stützstege 18, der Stützzungen 19 sowie *die* Rastaussparungen 22 identisch gestaltet, so daß auf die vorherige Beschreibung verwiesen wird.

Bei dieser Loslagerseite ist der Stützkörper 15b jedoch als quaderartiger Füllkörper gestaltet, der sich zu seinem freien Ende hin pyramidenstumpfartig verjüngt, wobei insbesondere eine Zentrierspitze 16b Pyramidenstumpfform aufweist. Die korrespondierende Stützausnehmung 21b ist rechteckig gestaltet und weist Abmessungen auf, die eine Beweglichkeit der Befestigungslasche 20b in zwei Freiheitsgraden, beim dargestellten Ausführungsbeispiel horizontal, ermöglichen. Auch die Rastaussparungen 22 sind in entsprechender Weise breiter gestaltet, um die Horizontalbeweglichkeit im Bereich des Stützkörpers 15b nicht zu blockieren.

Zur Festlegung des Kondensators an dem Kühler wird bei allen beschriebenen Ausführungsbeispielen der Kondensator zunächst schräg in die Steckhalterung eingesetzt und anschließend auch mit seiner Oberseite zum Kühler hin geschwenkt, wodurch die Rastanordnungen die Verrastung des Kondensators bewirken. Beim Hinschwenken des Kondensators zum Kühler hin erfolgt in gewissen Grenzen eine Kippung des unteren Bereiches des Kondensators im Bereich der Stützflansche oberhalb der Steckhalterung, wodurch die Unterseite des Kondensators nach außen gedrängt wird und an den Stützhaken der Steckhalterung zur Anlage kommt. Im montierten Zustand, d.h. im verrasteten Zustand des Kondensators steht somit die Unterseite des Kondensators im Bereich der Steckhalterung unter Spannung, wodurch die spielfreie Festlegung im Bereich der Steckhalterung erzielt wird.

## Patentansprüche

1. Wärmeübertrageranordnung mit zwei Wärmeübertragern (1, 1a), die durch eine Befestigungsvorrichtung an gegenüberliegenden Befestigungsseiten miteinander lösbar verbindbar sind, wobei die Befestigungsvorrichtung an einer Befestigungsseite eine mit hakenartigen Profilierungen versehene Steckhalterung aufweist, und wobei die Befestigungsvorrichtung an der anderen Befestigungsseite eine Rastverbindung (7, 8; 7a; 8a; 7b, 8b) aufweist, wobei die Steckhalterung (5, 6; 5a, 6a) wie auch die Rastverbindung im Bereich von *gegenüberliegenden* Sammelkästen ( 3, 4; 3a, 4a; 4b) des einen Wärmeübertragers positioniert sind,
**dadurch gekennzeichnet, dass**
die Rastverbindung in eine als Loslager gestaltete *Befestigungsstelle (7,* 7a, 7b) und in eine als Festlager gestaltete *Befestigungsstelle* (8, 8a, 8b) unterteilt ist, *dass jede Befestigungsstelle eine Rastanordnung an einem der Wärmeübertrager und wenigstens eine korrespondierende Rastaussparung* (22) *an dem anderen Wärmeübertrager umfasst*, und dass jeder Rastanordnung (10, 12; 17, 18, 19) eine Kraftaufnahmeeinrichtung (9, 9a, 13; 15, 15b) zugeordnet ist, die jeweils einen an dem einen Wärmeübertrager angeordneten Stützkörper (9, 9a; 15, 15b) sowie wenigstens einen an dem anderen Wärmeübertrager angeordneten und den Stützkörper im montierten Zustand der Wärmeübertrager zumindest teilweise umgreifenden Stützsteg (11; 21, 21b) aufweist.

2. Wärmeübertrageranordnung nach Anspruch 1, **dadurch gekennzeichnet, dass** jede Rastanordnung ein elastisch nachgiebiges Rasthakenpaar (10, 17) aufweist, wobei die Rasthaken jedes Rasthakenpaares (10, 17) die Ränder der korrespondierenden Rastaussparung (22) im montierten Zustand hintergreifen.

3. Wärmeübertrageranordnung nach Anspruch 2, **dadurch gekennzeichnet, dass** zwischen den Rasthaken jedes Rasthakenpaares (10, 17) jeweils wenigstens ein als Stütze dienender Anschlagsteg (12, 18) zur Begrenzung der Auslenkbarkeit der Rasthaken (10, 17) vorgesehen ist.

4. Wärmeübertrageranordnung nach Anspruch *1*, **dadurch gekennzeichnet, dass** die Sammelkästen aus Kunststoff hergestellt sind, und dass die den Sammelkästen des Wärmeübertragers zugeordneten Teile der Steckhalterung wie auch der Rastverbindung einstückig an den Sammelkästen angeformt sind.

5. Wärmeübertrageranordnung nach wenigstens einem der vorhergehenden Ansprüche, **dadurch gekennzeichnet, dass** die Rastanordnungen (10, 12) und die zugeordneten Kraftaufnahmeeinrichtungen (9, 9a, 13) zueinander benachbart positioniert sind, und dass die Ränder der Rastaussparungen (11) ergänzend als Stützstege der Kraftaufnahmeeinrichtungen gestaltet sind.

6. Wärmeübertrageranordnung nach wenigstens einem der vorhergehenden Ansprüche, **dadurch gekennzeichnet, dass** die Stützstege durch Ränder von Stützausnehmungen (21, 21b) gebildet sind, und dass die Rastaussparungen (22) und die Stützausnehmungen (21, 21b) zueinander beabstandet für jede Rastanordnung in einer gemeinsamen Halteplatte (20) vorgesehen sind.

7. Wärmeübertrageranordnung nach wenigstens einem der vorhergehenden Ansprüche, **dadurch gekennzeichnet, dass** die Stützkörper (15, 15b) mit sich verjüngenden Zentrierspitzen (16, 16b) versehen sind.

8. Wärmeübertrageranordnung nach Anspruch 7, **dadurch gekennzeichnet, dass** der Stützkörper (15) für das Festlager mit kreisrundem Querschnitt gestaltet ist, und dass auch die den Stützkörper umgreifende Stützausnehmung (21) kreisförmig ausgebildet ist.

9. Wärmeübertrageranordnung nach Anspruch 8, **dadurch gekennzeichnet, dass** der Stützkörper (15b) für das Loslager einen rechteckigen Querschnitt aufweist, und dass die korrespondierende Stützausnehmung (21b) ebenfalls einen rechteckigen Querschnitt aufweist, wobei die parallel zur Verbindungsachse zwischen Festlager und Loslager verlaufenden Seiten der Stützausnehmung (21b) gegenüber den flankierten Seitenflächen des Stützkörpers (15b) länger gestaltet sind.

## Claims

1. Heat exchanger arrangement with two heat exchangers (1, 1a), which are detachably connectable to one another by means of a mounting system at opposing mounting sides, wherein the mounting system has a push-in mounting of a hook-type shape on one mounting side and the mounting system on the other mounting side is a latch connection (7, 8; 7a, 8a; 7b, 8b), the push-in mounting (5, 6; 5a, 6a) and the latch connection being positioned in the region of *oppositely lying* collection tanks (3, 4; 3a, 4a; 4b) of the one heat exchanger,
**characterised in that**
the latch connection is split between a *mounting point (7,* 7a, 7b) provided in the form of a loose bearing and a *mounting point* (8, 8a, 8b) provided as a fixed bearing, *each mounting point comprising a latch arrangement on one of the heat exchangers and at least one corresponding latch orifice* (22) on *the other heat exchanger,* and each latch arrangement (10, 12; 17, 18, 19) is provided with a force-absorbing mechanism (9, 9a, 13; 15, 15b) having a respective supporting body (9, 9a; 15, 15b) and at least one supporting land (11; 21, 21b) on the other heat exchanger engaging at least partially around the supporting body when the heat exchangers are in the assembled state.

2. Heat exchanger arrangement as claimed in claim 1, **characterised in that** each latch arrangement has an elastically resilient latch hook pair (10, 17), the latch hooks of every latch hook pair (10, 17) latching round the edges of the corresponding latching orifice (22) in the assembled state.

3. Heat exchanger arrangement as claimed in claim 2, **characterised in that** at least one supporting land (12, 18) is provided respectively between the latch hooks of every latch hook pair (10, 17) to limit displacement of the latch hooks (10, 17).

4. Heat exchanger arrangement as claimed in claim 1, **characterised in that** the collecting tanks are made from a plastics material and the parts of the push-in mounting co-operating with the collecting tanks and the latch connection are integrally moulded on the collecting tanks.

5. Heat exchanger arrangement as claimed in at least one of the preceding claims, **characterised in that** the latch arrangements (10, 12) and the associated force-absorbing mechanisms (9, 9a, 13) are positioned adjacent to one another and the edges of the latch orifices (11) are additionally designed to serve as supporting lands of the force-absorbing mechanisms.

6. Heat exchanger arrangement as claimed in at least one of the preceding claims, **characterised in that** the supporting lands are provided in the form of edges of supporting orifices (21, 21b) and the latch orifices (22) and the supporting orifices (21, 21 b) are spaced at a distance apart from one another in a common retaining plate (20) for every latch arrangement.

7. Heat exchanger arrangement as claimed in at least one of the preceding claims, **characterised in that** the supporting bodies (15, 15b) are provided with tapered centring tips (16, 16b).

8. Heat exchanger arrangement as claimed in claim 7, **characterised in that** the supporting body (15) for the fixed bearing has a circular cross section and the supporting orifice (21) enclosing the supporting body is also circular.

9. Heat exchanger arrangement as claimed in claim 8, **characterised in that** the supporting body (15b) for the loose bearing has a rectangular cross section and the corresponding supporting orifice (21b) likewise has a rectangular cross section, the sides of the supporting orifice (21b) running parallel with the axis linking fixed bearing and loose bearing being longer than the end surfaces of the supporting body (15b) which they flank.

## Revendications

1. Dispositif d'échange de chaleur comprenant deux échangeurs de chaleur (1, 1a) qui peuvent être assemblés l'un avec l'autre de façon amovible sur des côtés de fixation opposés à l'aide d'un dispositif de fixation, le dispositif de fixation présentant, sur un côté de fixation, une fixation par enfichage munie de profilages en forme de crochet et le dispositif de fixation présentant, sur l'autre côté de fixation, un assemblage par encliquetage (7, 8 ; 7a ; 8a ; 7b, 8b), la fixation par enfichage (5, 6 ; 5a, 6a) comme également l'assemblage par encliquetage étant positionnés dans la zone de collecteurs (3, 4 ; 3a, 4a ; 4b) de l'un des échangeurs de chaleur, **caractérisé en ce que** l'assemblage par encliquetage est divisé en un point de fixation (7, 7a, 7b) réalisé comme appui libre et en un point de fixation (8, 8a, 8b) réalisé comme appui fixe, **en ce que** chaque point de fixation comporte un dispositif encliquetable sur l'un des échangeurs de chaleur et au moins un évidement d'encliquetage correspondant (22) sur l'autre échangeur de chaleur et **en ce qu'**à chaque dispositif encliquetable (10, 12 ; 17, 18, 19) est affecté un dispositif de reprise d'efforts (9, 9a, 13 ; 15, 15b) qui présente respectivement un corps d'appui (9, 9a ; 15, 15b) disposé sur l'un des échangeurs de chaleur et au moins une nervure d'appui (11 ; 21, 21b) disposée sur l'autre échangeur de chaleur et entourant, au moins en partie, le corps d'appui quand l'échangeur de chaleur est monté.

2. Dispositif d'échange de chaleur selon la revendication 1, **caractérisé en ce que** chaque dispositif encliquetable présente une paire de crochets (10, 17) encliquetables flexibles et élastiques, les crochets encliquetables de chaque paire de crochets encliquetables (10, 17) s'engageant derrière les bords de l'évidement d'encliquetage (22) correspondant, à l'état monté.

3. Dispositif d'échange de chaleur selon la revendication 2, **caractérisé en ce qu'**entre les crochets encliquetables de chaque paire de crochets encliquetables (10, 17), il est prévu respectivement au moins une nervure de butée (12, 18) servant d'appui et permettant de limiter la possibilité de déviation des crochets encliquetables (10, 17).

4. Dispositif d'échange de chaleur selon la revendication 1, **caractérisé en ce que** les collecteurs sont en matière plastique et **en ce que** les pièces affectées aux collecteurs de l'échangeur de chaleur et faisant partie de la fixation par enfichage comme de l'assemblage par encliquetage sont moulées d'un seul bloc sur les collecteurs.

5. Dispositif d'échange de chaleur selon au moins l'une des revendications précédentes, **caractérisé en ce que** les dispositifs encliquetables (10, 12) et les dispositifs de reprise d'efforts (9, 9a, 13) associés sont positionnés en étant adjacents l'un à l'autre et **en ce que** les bords des évidements d'encliquetage (11) sont réalisés à titre complémentaire comme nervures d'appui des dispositifs de reprise d'efforts.

6. Dispositif d'échange de chaleur selon au moins l'une des revendications précédentes, **caractérisé en ce que** les nervures d'appui sont formées par des bords d'évidements d'appui (21, 21b) et **en ce que** les évidements d'encliquetage (22) et les évidements d'appui (21, 21b) sont prévus, à distance les uns des autres, dans une plaque de maintien (20) commune pour chaque dispositif encliquetable.

7. Dispositif d'échange de chaleur selon au moins l'une des revendications précédentes, **caractérisé en ce que** les corps d'appui (15, 15b) sont pourvus de pointes de centrage (16, 16b) présentant une section décroissante.

8. Dispositif d'échange de chaleur selon la revendication 7, **caractérisé en ce que** le corps d'appui (15) pour l'appui fixe est réalisé avec une section transversale circulaire et **en ce que** l'évidement d'appui (21) entourant le corps d'appui est également circulaire.

9. Dispositif d'échange de chaleur selon la revendication 8, **caractérisé en ce que** le corps d'appui (15b) pour l'appui libre présente une section transversale rectangulaire et **en ce que** l'évidement d'appui (21b) correspondant présente également une section transversale rectangulaire, les côtés de l'évidement d'appui (21b) parallèles à l'axe d'assemblage entre l'appui fixe et l'appui libre étant plus longs que les surfaces latérales du corps d'appui (15b).
